# EUROPÄISCHE PATENTANMELDUNG

(11) **EP 2 236 954 A2**
(43) Veröffentlichungstag der Anmeldung: **06.10.2010**
(21) Anmeldenummer: 09007186.1
(22) Anmeldetag: 29.05.2009
(51) Int. Cl.: F24J 2/05, F24J 2/30

(54) **Sonnenkollektoreinrichtung, Solaranlage und Verfahren zum Betreiben einer Solaranlage**

(30) Priorität: 30.03.2009 CH 5042009
(71) Anmelder: Hartmann, Walter, 7530 Zernez (CH)
(72) Erfinder: Hartmann, Walter, 7530 Zernez (CH)
(74) Vertreter: Fischer, Britta Ruth

(57) **Zusammenfassung**

Die Erfindung betrifft eine Sonnenkollektoreinrichtung (1) mit mehreren nebeneinander angeordneten Sonnenkollektoren (2) und einer Schnee- und/oder Eisschmelzeinrichtung (4, 5, 7), wobei die Sonnenkollektoren (2) als Vakuumröhrenkollektoren ausgebildet sind, die jeweils ein Glasrohr, einen in dem Glasrohr angeordneten Absorber und einen Reflektor mit einer Reflektionsfläche umfassen, und wobei die Schnee- und/oder Eisschmelzeinrichtung (4) wenigstens ein thermisch leitendes Rohr (5) umfasst, das unterhalb der Sonnenkollektoren (2) verläuft, sodass die Reflektionsfläche der Reflektoren der als Vakuumröhrenkollektoren ausgebildeten Sonnenkollektoren (2) von dem wenigstens einen thermisch leitenden Rohr (5) wegweist. Die Erfindung betrifft ferner eine Solaranlage (10) mit einer oder mehrerer solcher Sonnenkollektoreinrichtungen (1) und ein Verfahren zum Betreiben einer solchen Solaranlage (10).

## Beschreibung

Die Erfindung betrifft eine Sonnenkollektoreinrichtung gemäss Oberbegriff des Anspruchs 1, eine Solaranlage gemäss Oberbegriff des Anspruchs 14 und ein Verfahren zum Betreiben einer Solaranlage gemäss Oberbegriff des Anspruchs 15.

Es ist bekannt, Solarzellen in Form von Flachkollektoren auf einem Gehäusedach bzw. einer Dachschräge anzubringen, um solare Energie zur Heizenergiegewinnung und zur Warmwassererzeugung zu nutzen. Lagert sich Schnee oder Eis auf den Flachkollektoren ab, so führt dies zu einer deutlichen Herabsetzung des Wirkungsgrades der Solarzellen, da der Sonnenlichteinfall durch den Schnee bzw. das Eis behindert wird.

Aus der japanischen Patentanmeldung JP 59212643 A ist es nun bekannt, zum Schmelzen von Schnee heisses Wasser in einem Wasserrohr zu verdampfen, welches an einem unteren Kopf eines Heizrohrs angeordnet ist. Der so erhaltene Wasserdampf steigt durch das Heizrohr, wobei das Dachmaterial über eine Wärmesammel- und Wärmeabstrahlungsplatte erwärmt wird, um den Schnee zu schmelzen.

Bei der japanischen Patentanmeldung JP 62210352 A wird in einem Schneeschmelzmodus ein thermisches Medium mittels eines Boilers erhitzt und rückgeführt, um Hitze an eine Verdampfungseinheit eines Heizrohrs abzugeben. Eine Arbeitsflüssigkeit wird mittels der Verdampfungseinheit verdampft und die dabei erzeugte Wärme wird über Lamellen an den Schnee abgegeben, um diesen zu schmelzen. Die Flüssigkeit kondensiert dann und kehrt zur Verdampfungseinheit zurück.

In der japanischen Patentanmeldung JP 61001950 A wird zum Schneeschmelzen in einem Boiler erhitztes Wasser mittels einer Pumpe durch diverse Rohre geleitet, um schliesslich durch Solarhitzekollektorrohre zu fliessen.

Aus der japanischen Patentanmeldung JP 61125545 A ist es bekannt, ein Sonnenkollektorfeld mittels einer durch eine lichtdurchlässige Abdeckung versiegelte Luftschicht von der Umgebungsatmosphäre zu isolieren. Zum Schmelzen von Schnee wird die lichtdurchlässige Abdeckung entfernt und ein Heizmedium unter dem Sonnenkollektorfeld durchgeführt.

In der Offenlegungsschrift DE 198 08 505 A1 werden thermische oder photovoltaische Solarzellen auf einer Dachschräge eingesetzt. Oberhalb der Solarzellen sind lichtdurchlässige Führungen in Form von Hohlkammerplatten vorgesehen, durch die zum Schmelzen von Schnee oder Eis warme Abluft geführt wird.

Es ist Aufgabe der vorliegenden Erfindung, eine Sonnenkollektoreinrichtung und eine Solaranlage bereitzustellen, mit denen auch beim Vorhandensein von Schnee und/oder Eis auf den jeweiligen Sonnenkollektoren effizient solare Energie gewonnen und genutzt werden kann. Es ist ferner Aufgabe der Erfindung, ein Verfahren zum Betreiben einer solchen Solaranlage bereitzustellen.

Diese Aufgabe wird durch eine Sonnenkollektoreinrichtung mit den Merkmalen des Anspruchs 1, eine Solaranlage mit den Merkmalen des Anspruchs 14 und ein Verfahren mit den Merkmalen des Anspruchs 15 gelöst.

Die erfindungsgemässe Sonnenkollektoreinrichtung weist mehrere nebeneinander angeordnete Sonnenkollektoren und eine Schnee- und/oder Eisschmelzeinrichtung auf. Die Sonnenkollektoren sind als Vakuumröhrenkollektoren ausgebildet, die jeweils ein Glasrohr, einen in dem Glasrohr angeordneten Absorber und einen Reflektor mit einer Reflektionsfläche umfassen. Der Reflektor umgibt das Glasrohr teilweise. Die Schnee- und/oder Eisschmelzeinrichtung umfasst wenigstens ein thermisch leitendes Rohr, das unterhalb der Sonnenkollektoren derart verläuft, dass die Reflektionsfläche der Reflektoren der als Vakuumröhrenkollektoren ausgebildeten Sonnenkollektoren von dem thermisch leitenden Rohr wegweist. Das thermisch leitende Rohr verläuft bevorzugt in Querrichtung zu den Sonnenkollektoren. Besonders bevorzugt ist das thermisch leitende Rohr als Rohrschleife ausgeführt. Es kann mäanderförmig ausgeführt sein.

Vakuumröhrenkollektoren als Sonnenkollektoren einzusetzen, führt verglichen mit dem Einsatz von Flachkollektoren zu einer höheren Effizienz der Energiegewinnung, da bei Vakuumröhrenkollektoren wesentlich geringere Wärmeverluste durch Konvektion auftreten. Insbesondere in Gebieten, in denen die Sonneneinstrahlung während der gesamten Heizperiode auch bei tiefen Aussentemperaturen und oftmals kaltem Wind hoch ist, wie dies beispielsweise in hoch liegenden Gebieten wie z.B. Hochtälern der Fall ist, kommen die Vorteile von Vakuumröhrenkollektoren zum Tragen, da hier Wärmeverluste durch Konvektion stark ins Gewicht fallen würden.

Ferner fällt bei seitlicher Sonneneinstrahlung die Effizienz bzw. der Erntefaktor von Flachkollektoren rasch ab. Vakuumröhrenkollektoren sind dagegen bei seitlicher Sonneneinstrahlung ebenso effizient wie bei senkrechter Sonneneinstrahlung, sodass die Orientierung der Dachneigung - anders als bei Flachkollektoren - keinen wesentlichen Einfluss auf ihre Effizienz hat.

Dank minimaler Konvektionsverluste liefern Vakuumröhrenkollektoren unter gleichen Sonneneinstrahlungsbedingungen wesentlich höhere Temperaturen als Flachkollektoren, was insbesondere bei tiefen Aussentemperaturen und windigen Verhältnissen stark ins Gewicht fällt und zwar sowohl in Bezug auf die Warmwassererzeugung als auch für die Heizungsunterstützung, d.h. die Unterstützung einer in einem Gebäude integrierten Heizeinheit wie z.B. einer Ölheizung, einer Gasheizung, einem Heizkessel oder einer Wärmepumpe. So kann es beispielsweise in bestimmten hoch gelegenen Gegenden erforderlich sein, auch im Sommer insbesondere Badezimmer und Toiletten zu heizen. Eine Überhitzung eines Warmwasserspeichers kann vermieden werden.

Mit der Schnee- und/oder Eisschmelzeinrichtung der erfindungsgemässen Sonnenkollektoreinrichtung kann Schnee bzw. Eis von den Sonnenkollektoren entfernt werden, ohne die Sonnenkollektoren zu beschädigen. Die Gefahr einer Beschädigung besteht beispielsweise bei einer manuellen Entfernung einer Schneedecke mit Hilfe einer Schaufel und einem Besen, was ausserdem zeitaufwendiger und wegen der erforderlichen Sicherheitsvorkehrungen auch kostspieliger wäre, als die Entfernung von Schnee bzw. Eis mittels der Schnee- und/oder Eisschmelzeinrichtung der erfindungsgemässen Sonnenkollektoreinrichtung.

Die erfindungsgemässe Solaranlage weist einen Solarkreislauf und einen Heizkreislauf mit einer Heizeinheit auf, wobei in dem Solarkreislauf eine oder mehrere der erfindungsgemässen Sonnenkollektoreinrichtungen vorgesehen sind. Der Solarkreislauf und der Heizkreislauf sind über einen Wärmetauscher miteinander gekoppelt. Das wenigstens eine thermisch leitende Rohr der Schnee- und/oder Eisschmelzeinrichtung einer jeden Sonnenkollektoreinrichtung bildet einen Teil eines Kühlmittelrücklaufs des Solarkreislaufs.

Gemäss dem erfindungsgemässen Verfahren zum Betreiben einer Solaranlage gemäss der Erfindung wird beim Vorhandensein von Schnee und/oder Eis auf den Sonnenkollektoren der einen oder mehreren erfindungsgemässen Sonnenkollektoreinrichtungen - und vorzugsweise bei genügender bzw. ausreichender Sonneneinstrahlung - die Heizeinheit des Heizkreislaufes betrieben, um Wärme zu generieren, die über den Wärmetauscher der Solaranlage an das im Solarkreislauf befindliche Kühlmittel abgegeben wird und dieses aufheizt. Mittels einer im Solarkreislauf angeordneten Umwälzpumpe wird dann das derart aufgeheizte Kühlmittel über den Kühlmittelrücklauf des Solarkreislaufs durch das wenigstens eine thermisch Rohr der jeweiligen Schnee- und/oder Eisschmelzeinrichtung der einen oder mehreren Sonnenkollektoreinrichtungen befordert, um dabei zumindest teilweises Schmelzen von Schnee und/oder Eis zu bewirken.

Mit der Sonnenkollektoreinrichtung, der Solaranlage und dem Verfahren zum Betreiben einer Solaranlage gemäss der Erfindung kann effizient solare Energie gewonnen und insbesondere zur Warmwassererzeugung und Heizunterstützung genutzt werden, wobei durch Schnee bzw. Eis hervorgerufene Schwierigkeiten bei der Energiegewinnung vorteilhafterweise mit geringem Aufwand und energieeffizient gelöst werden können.

Weitere vorteilhafte Ausgestaltungen der Erfindung ergeben sich aus den abhängigen Ansprüchen und den anhand der Zeichnungen nachfolgend dargestellten Ausführungsbeispielen. Es zeigen:
Fig. 1 eine schematische Darstellung einer erfindungsgemässen Sonnenkollektoreinrichtung und
Fig. 2 eine schematische Darstellung einer erfindungsgemässen integrierten Solaranlage.

In den Figuren bezeichnen gleiche Bezugszeichen strukturell bzw. funktionell gleich wirkende Komponenten, wenn nichts anderes im Anmeldetext vermerkt ist.

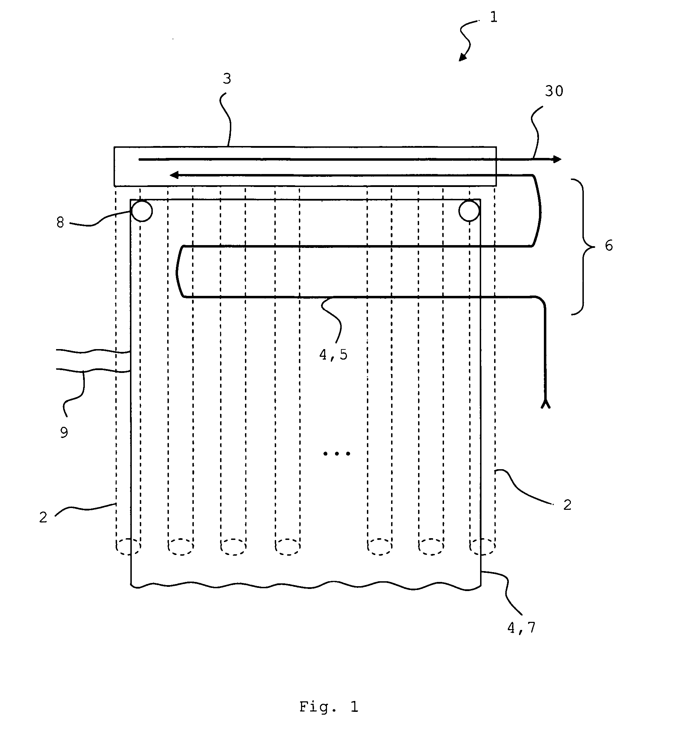

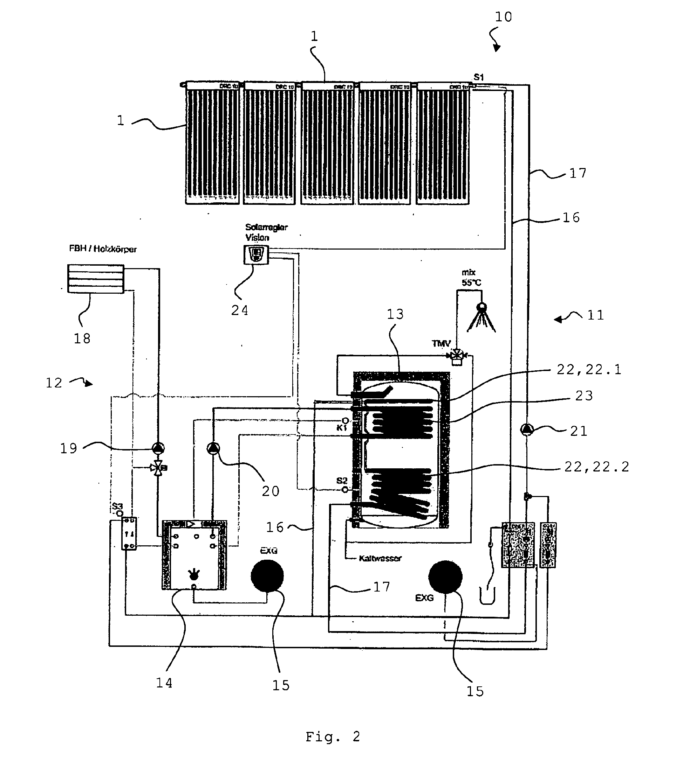

Figur 1 zeigt eine Sonnenkollektoreinrichtung 1 gemäss der Erfindung, die mehrere gleich ausgerichtete und parallel nebeneinander angeordnete Sonnenkollektoren 2 aufweist, bei denen es sich um Vakuumröhrenkollektoren handelt. Die Vakuumröhrenkollektoren 2 weisen ein vorzugsweise metallisches Abschlussteil 3 auf, welches einen Wärmetauscher umfasst, über den die von den Vakuumröhrenkollektoren 2 aufgefangene und in deren jeweiligem Wärmeträger gespeicherte Wärmeenergie an ein Kühlmittel eines Solarkreislaufs abgegeben wird. Der Solarkreislauf wird im Zusammenhang mit Figur 2 detailliert beschrieben. Jeder Vakuumröhrenkollektor 2 umfasst ein Glasrohr, einen in dem Glasrohr angeordneten Absorber und einen Reflektor, die der Einfachheit halber nicht dargestellt sind. Für den detaillierten Aufbau eines Vakuumröhrenkollektors wird auf http://de.wikipedia.org/wiki/Vakuumröhrenkollektor verweisen. Die Sonnenkollektoreinrichtung 1 umfasst beispielsweise zehn Vakuumröhrenkollektoren 2. Selbstverständlich können auch mehr oder weniger Vakuumröhrenkollektoren 2 vorgesehen sein.

Die erfindungsgemässe Sonnenkollektoreinrichtung 1 umfasst ferner eine Schnee- und/oder Eisschmelzeinrichtung 4. Die Schnee- und/oder Eisschmelzeinrichtung 4 umfasst wenigstens ein thermisch leitendes Rohr 5, das bevorzugt quer zu den Vakuumröhrenkollektoren 2, d.h. zu deren Längsachse, verläuft. Das wenigstens eine thermisch leitende Rohr 5 besteht beispielsweise aus Aluminium und/oder Kupfer als gut wärmeleitenden Materialien. Das thermisch leitende Rohr 5 ist vorzugsweise, wie in Figur 1 dargestellt, als Rohrschleife ausgebildet, die sich bevorzugterweise länger in Querrichtung zu den Vakuumröhrenkollektoren 2 als in deren Längsrichtung erstreckt. Die Rohrschleife 5 ist so zu den Vakuumröhrenkollektoren 2 angeordnet, dass die jeweilige Reflektionsfläche der nicht dargestellten Reflektoren der Vakuumröhrenkollektoren 2 von der Rohrschleife 5 wegweist. Das heisst, im an einem Gebäudedach angebrachten Zustand ist die Rohrschleife 5 unterhalb der Vakuumröhrenkollektoren 5, also dachseitig, angebracht.

Das vorzugsweise als Rohrschleife ausgebildete thermisch leitende Rohr 5 verläuft vorzugsweise unter demjenigen Endbereich 6 der nebeneinander angeordneten Vakuumröhrenkollektoren 2, der sich weiter oben als der andere, gegenüberliegende Endbereich befindet, wenn die Sonnenkollektoreinrichtung 1 an einem Gebäudedach angebracht ist. Insbesondere umfasst der Endbereich 6 ungefähr ein Viertel der Vakuumröhrenkollektoren 2 in deren Längsrichtung. Wird nun warmes Wasser durch die Rohrschleife 5 geleitet, so schmilzt sich auf dem Endbereich 6 befindlicher Schnee bzw. befindliches Eis, was mit Hilfe des weiter unten im Zusammenhang mit der erfindungsgemässen Solaranlage beschriebenen Verfahrens vorteilhafterweise zum Abrutschen der gesamten Schnee- und/oder Eisdecke führt.

Selbstverständlich kann der Endbereich 6 auch grösser gewählt werden, sodass sich die Rohrschleife 5 über einen grösseren Bereich erstreckt. So kann sich die Rohrschleife 5 beispielsweise auch unter der gesamten von den Vakuumröhrenkollektoren 2 definierten Fläche erstrecken. Das Begrenzen des Bereichs, unter dem sich die Rohrschleife 5 befindet, auf einen Endbereich 6, der wie oben beschrieben nicht mehr als ein Viertel der Vakuumröhrenkollektoren 2 umfasst, ist jedoch energieeffizienter. Soll die erfindungsgemässe Sonnenkollektoreinrichtung 1 auf einem Steildach montiert werden, so genügt die in einem derart gewählten Endbereich 6 vorgesehene Rohrschleife 5, um die Vakuumröhrenkollektoren 2 von Schnee bzw. Eis zu befreien.

Soll die erfindungsgemässe Sonnenkollektoreinrichtung 1 auf einem normal geneigten Schrägdach, das eine geringere Steigung als ein typisches Steildach aufweist, oder auf einem Gebäudedach noch geringerer oder gar keiner Steigung montiert werden, so weist die Schnee- und/oder Eisschmelzeinrichtung 4 vorzugweise zusätzlich zu dem thermisch leitenden Rohr 5 eine thermisch leitende Platte 7 auf, die zwischen den Vakuumröhrenkollektoren 2 und dem bevorzugt als Rohrschleife ausgebildeten thermisch leitenden Rohr 5 angeordnet ist. In an einem Gebäudedach angebrachten Zustand befindet sich also die thermisch leitende Platte 7 unterhalb der Unterseite der Vakuumröhrenkollektoren 2. Figur 1 zeigt den Blick von unten auf die erfindungsgemässe Sonnenkollektoreinrichtung 1, weshalb die Vakuumröhrenkollektoren 2 gestrichelt dargestellt sind, da sie in Blickrichtung hinter der thermisch leitenden Platte 7 liegen. Die thermisch leitende Platte 7 dient dazu, die Effizienz der Übertragung der Wärme des durch das thermisch leitende Rohr 5 fliessendes Kühlmittels zu erhöhen, sodass eine bessere Schmelzwirkung bezüglich Schnee und Eis erzielt werden kann.

Die thermisch leitende Platte 7 ist vorzugsweise als rostfreies Blech, insbesondere als Aluminiumblech, ausgestaltet. Selbstverständlich kann die thermisch leitende Platte 7 auch aus einem anderen, gut wärmeleitenden Material bestehen. Auf der den Vakuumröhrenkollektoren 2 gegenüberliegenden Seite der thermisch leitenden Platte 7 sind vorzugsweise Abstandshalter 8 vorgesehen, die dazu dienen, einen Zwischenraum zwischen der thermisch leitenden Platte 7 und einem Gebäudedach zu schaffen, an dem die Sonnenkollektoreinrichtung 1 angebracht ist. Durch das Schaffen des Zwischenraums können Algenwuchs und die Bildung von Kondenswasser vermieden bzw. vermindert werden. Die Abstandshalter 8 können beispielsweise aus Gummi, Kunststoff und/oder Holz bestehen bzw. die genannten Materialien umfassen. Vorzugsweise ist ein Abstandshalter 8 in jeder Ecke des thermisch leitenden Blechs 7 vorgesehen.

Sollen auf einem Gebäudedach mehrere Sonnenkollektoreinrichtungen 1 angebracht werden, so können sich in Längsrichtung aufeinander folgende und aufeinander ausgerichtete Sonnenkollektoreinrichtungen 1 ein thermisch leitendes Blech 7 teilen, d.h. das thermisch leitende Blech 7 erstreckt sich durch mehrere in Längsrichtung nacheinander angeordnete Sonnenkollektoreinrichtungen 1. Dies ist in Figur 1 durch den unteren geschlängelten Rand des thermisch leitenden Blechs 7 angedeutet. Zur Verbindung mit der thermisch leitenden Platte einer in Querrichtung neben der Sonnenkollektoreinrichtung 1 angebrachten weiteren Sonnenkollektoreinrichtung ist, weist die thermisch leitende Platte 7 an ihrem seitlichen Rand bzw. ihren seitlichen Rändern vorzugsweise wenigstens ein flexibles Verbindungsmittel 9 auf, um die Stabilität einer Kombination aus mehreren erfindungsgemässen Sonnenkollektoreinrichtungen zu erhöhen. Das flexible Verbindungsmittel 9 ist vorzugsweise als flexibler Metallschlauch ausgebildet.

Mehrere in Querrichtung nebeneinander angeordnete und aufeinander ausgerichtete Sonnenkollektoreinrichtungen 1 teilen sich vorzugsweise ein bevorzugt als Rohrschleife ausgebildetes thermisch leitendes Rohr 5, d.h. ein thermisch leitendes Rohr 5 erstreckt sich vorzugsweise durch mehrere nebeneinander angeordnete Sonnenkollektoreinrichtungen 1. In Figur 1 ist der Verlauf der Rohrschleife 5 der Einfachheit halber nur für eine Sonnenkollektoreinrichtung 1 dargestellt. Erstreckt sich die Rohrschleife 5 über mehrere seitlich nebeneinander angeordnete Sonnenkollektoreinrichtungen 1, so kommt der von der Blickrichtung des Betrachters aus gesehen rechte Abschnitt der dargestellten Rohrschleife 5 der am weitesten rechts aussen an einem Gebäudedach angebrachten Sonnenkollektoreinrichtung 1 zu und der von der Blickrichtung des Betrachters aus gesehen linke Abschnitt der dargestellten Rohrschleife 5 kommt der am weitesten links aussen an einem Gebäudedach angebrachten Sonnenkollektoreinrichtung 1 zu, wobei sich die Begriffe "links" und "rechts" auf die Blickrichtung auf die Unterseite der Sonnenkollektoreinrichtungen (und somit des Gebäudedachs) beziehen und die Begriffe "links" und "rechts" selbstverständlich vertauschbar sind. Den zwischen den äusseren Sonnenkollektoreinrichtungen angeordneten Sonnenkollektoreneinrichtungen sind dann entsprechend zwei parallel in Querrichtung zu den Vakuumröhrenkollektoren 2 verlaufende thermisch leitende Rohre der sämtliche Sonnenkollektoreinrichtungen abdeckenden Rohrschleife 5 zugeordnet.

Die erfindungsgemässe Sonnenkollektoreinrichtung 1 weist vorzugsweise einen nicht dargestellten Schnee- und/oder Eissensor auf, der dazu dient zu erkennen, ob sich Schnee und/oder Eis auf den Vakuumröhrenkollektoren 2 gebildet hat. Der Schnee- und/oder Eissensor ist bevorzugt zwischen zwei benachbarten Vakuumröhrenkollektoren 2 einer Sonnenkollektoreinrichtung 1 angeordnet und ist insbesondere als Lichtsensor ausgebildet.

Die erfindungsgemässe Sonnenkollektoreinrichtung 1 weist vorzugsweise ferner einen nicht dargestellten Sonneneinstrahlungserkennungssensor auf, d.h. einen Sensor, der erkennt, ob eine Sonneneinstrahlung bestimmter Wärme auf die Sonnenkollektoreinrichtung 1 erfolgt. Der Sonneneinstrahlungssensor ist vorzugsweise als Temperatursensor ausgebildet. Er kann jedoch auch als Lichtsensor ausgebildet sein. Der Sonneneinstrahlungserkennungssensor ist bevorzugt auf der dem wenigstens einen thermisch leitenden Rohr 5 gegenüberliegenden Seite der Vakuumröhrenkollektoren 2 angeordnet. Er ist vorzugsweise in einem Abstand zu den Vakuumröhrenkollektoren 2 angeordnet, sodass er bei Schneefall und/oder Eisbildung nicht von Schnee bzw. Eis bedeckt wird und sich oberhalb einer sich gegebenenfalls bildenden Schnee- und/oder Eisschicht befindet.

Figur 2 zeigt eine Solaranlage 10 gemäss der Erfindung, die in einem Gebäude integriert sein kann. Die Solaranlage 10 umfasst einen Solarkreislauf 11 und eine Heizkreislauf 12, die über einen Wärmetauscher 13 miteinander gekoppelt sind, der auch als Wasserspeichereinheit bzw. Warmwasserspeicher dient. Der Solarkreislauf 11 umfasst eine oder mehrere, in der Figur 2 beispielhaft fünf, erfindungsgemässe Sonnenkollektoreinrichtungen 1, wie sie in Figur 1 dargestellt sind, die auf einem Gebäudedach angebracht bzw. anbringbar sind. In dem Solarkreislauf 11 zirkuliert ein Kühlmittel, welches insbesondere Glykol enthaltenes bzw. glykolisiertes Wasser ist. In dem Heizkreislauf 12 ist eine Heizeinheit 14 zum Erzeugen von Wärme vorgesehen, bei der es sich beispielsweise um eine Ölheizung, eine Gasheizung, einen Wärmekessel und/oder eine Wärmepumpe handeln kann. Sowohl der Solarkreislauf 11 als auch der Heizkreislauf 12 weisen vorzugsweise je ein Expansionsgefäss 15 für einen Druckausgleich aus. Der Heizkreislauf 12 weist einen in einem Raum eines Gebäudes angeordneten bzw. anordnenbaren Heizkörper 18 auf. In dem Heizmediumpfad von der Heizeinheit 14 zu dem Heizkörper 18 ist eine Umwälzpumpe 19 vorgesehen. Ebenso ist eine Umwälzpumpe 20 in dem Heizmediumpfad von der Heizeinheit 14 zum Wärmetauscher 13 vorgesehen.

Der Solarkreislauf 11 umfasst einen Kühlmittelvorlaufpfad 16 (kurz: Kühlmittelvorlauf 16) und einen Kühlmittelrücklaufpfad 17 (kurz: Kühlmittelrücklauf 17), wobei der Kühlmittelvorlauf 16 von den Sonnenkollektoreinrichtungen 1 zum Wärmetauscher 13 und der Kühlmittelrücklauf 17 vom Wärmetauscher 13 zu den Sonnenkollektoreneinrichtungen 1 verläuft. In dem Kühlmittelrücklauf 17 des Solarkreislaufs 11 ist eine Umwälzpumpe 21 angeordnet. Das wenigstens eine thermisch leitende Rohr 5 einer jeden Sonnenkollektoreinrichtung 1 bildet einen Teil des Kühlmittelrücklaufs 17 des Solarkreislaufs 11.

Der Wärmetauscher 13 umfasst eine insbesondere spiralförmige Solarrohreinheit 22 und eine insbesondere spiralförmige Heizrohreinheit 23, die in vorzugsweise Wasser als Heizmedium gelagert sind und insbesondere als Heizschlangen ausgebildet sind. Die Solarrohreinheit 22 besteht vorzugsweise aus einem oberen Teil 22.1 und einem unteren Teil 22.2, die miteinander verbunden sind, wobei die Heizrohreinheit 23 zwischen dem oberen Teil 22.1 und dem unteren Teil 22.2 angeordnet ist. Die Begriffe "oben" und "unten" beziehen sich dabei auf einen Wärmetauscher 13 in der Ausrichtung, wie er in Figur 2 dargestellt ist und wie er beispielsweise auf einem Boden steht. Der obere Teil 22.1 der Solarrohreinheit 22 wird vorzugsweise aus einer Schleife der spiralförmigen Solarrohreinheit 22 gebildet. Selbstverständlich kann der obere Teil 22.1 auch durch mehrere Schleifen gebildet sein.

Die Solaranlage 10 umfasst weiter eine Steuereinheit 24 zum Steuern der Solaranlage, die in der Figur 2 als Solarregler bezeichnet wird.

Im Normalbetrieb wird die Umwälzpumpe 21 des Solarkreislaufs 11 erst dann durch der Steuereinheit 24 in Betrieb genommen, wenn die Temperatur des in den Vakuumröhrenkollektoren 2 befindlichen Kühlmittels höher ist als die Temperatur des Warmwasserspeichers bzw. Boilers (Wasserspeichereinheit), der durch den Wärmetauscher 13 gebildet wird. Die Temperatur des in den Vakuumröhrenkollektoren 2 befindlichen Kühlmittels kann über einen im Vakuum einer Vakuumröhrenröhre der Sonnenkollektoreinrichtung 1 angeordneten Temperatursensor festgestellt werden. Das Wasser in der Wasserspeichereinheit wird mittels der Vakuumröhrenkollektoren 2 solange aufgeheizt, bis es eine bestimmte Mindesttemperatur, z.B. 55 Grad Celsius, erreicht hat. Erst dann schaltet die Steuereinheit 24 das Dreiwegeventil TMV derart, dass das von den Vakuumröhrenkollektoren 2 aufgeheizte Wasser in den Heizkreislauf 12 und somit zum Heizkörper 18 gelangen und zur Warmwasseraufbereitung und zur Heizunterstützung eingesetzt werden kann. Die Heizeinheit 14 wird von der Steuereinheit 24 dann dazu geschaltet, wenn die Wärme aus dem als Boiler fungierenden Wärmetauscher 13 den Bedarf nicht mehr abdeckt, wobei über die Heizeinheit 14 nur der obere Teil des Wärmetauschers 13, in dem sich die Heizrohreinheit 23 befindet, aufgeheizt wird, sodass der als Wasserspeichereinheit fungierende Wärmetauscher 13 genügend Speicherkapazität für die Wärme aus den Vakuumröhrenkollektoren 2 hat, sobald diese über die Solarrohreinheit 22 abgegeben wird.

Das wenigstens eine thermisch leitende Rohr 5 einer jeder Sonnenkollektoreinrichtung 1, das im Kühlmittelrücklauf 17 angeordnet ist, befördert im Normalbetrieb abgekühltes Kühlmittel in die Vakuumröhrenkollektoren 2 zurück, wobei je nach Intensität der Sonneneinstrahlung eine mehr oder weniger starke Aufheizung des Kühlmittels erfolgt, das dann aufgeheizt über den Kühlmittelvorlauf 16 zum Wärmetauscher 13 gelangt. Dies ist in Figur 1 durch den Pfeil 30 angedeutet.

Das Vorhandensein von Schnee bzw. Eis auf einer Sonnenkollektoreinrichtung 1 kann durch den Benutzer festgestellt werden und zwar z.B. durch visuelle Inspektion. Das Vorhandensein von Schnee bzw. Eis kann jedoch auch mit Hilfe des Schnee- und/oder Eiserkennungssensors erkannt werden, der vorzugsweise jeder Sonnenkollektoreinrichtung 1 zugeordnet ist. Überschreitet der Messwert des Schnee- und/oder Eiserkennungssensors einen vorbestimmten ersten Grenzwert, so wird auf das Vorhandensein von Schnee bzw. Eis auf der entsprechenden Sonnenkollektoreinrichtung 1 erkannt. Die Auswertung der Messwerte des bzw. der Schnee- und/oder Eiserkennungssensoren erfolgt bevorzugt durch die Steuereinheit 24.

Zusätzlich zu der Ermittlung, ob Schnee bzw. Eis auf einer Sonnenkollektoreinrichtung 1 liegt, wird vorzugsweise ermittelt, ob genügend Sonneneinstrahlung und somit genügend solare Energie gegeben ist, sodass die einen oder mehreren Sonnenkollektoreinrichtungen 1 zur Warmwassererzeugung und/oder Heizunterstützung eingesetzt werden können. Hierzu wird vorzugsweise der oben erwähnte Sonnenstrahlungserkennungssensor eingesetzt. Überschreitet dessen Messwert einen vorbestimmten zweiten Grenzwert, so wird auf das Vorhandensein genügender Sonneneinstrahlung erkannt. Die Auswertung der Messwerte des bzw. der Sonnenstrahlungserkennungssensoren erfolgt bevorzugt ebenfalls durch die Steuereinheit 24. Die Überprüfung auf das Vorliegen genügender Sonneneinstrahlung wird auch als zweite Automatik bezeichnet, während die Überprüfung auf das Vorhandensein von Schnee bzw. Eis die erste Automatik darstellt.

Werden das Vorhandensein von Schnee bzw. Eis auf einer der Sonnenkollektoreinrichtungen 1 und vorzugsweise das Vorliegen einer genügenden Sonneneinstrahlung erkannt, so wird die Heizeinheit 14 des Heizkreislaufes 12 betrieben, um Wärme zu generieren und dadurch das Heizmedium aufzuheizen. Solange die Sonnenkollektoreinrichtung 1 mit Schnee bzw. Eis bedeckt ist, produziert sie im Wesentlichen keine Wärme, was über den im Vakuum einer Vakuumröhrenröhre der Sonnenkollektoreinrichtung 1 angeordneten Temperatursensor festgestellt werden kann. Wird bei Auswertung des Messsignals dieses Temperatursensors durch die Steuereinheit 24 festgestellt, dass die Vakuumröhrenkollektoren 2 keine Wärme generieren, so schaltet die Steuereinheit 24 die Heizeinheit 14 vorzugweise automatisch ein.

Die generierte Wärme wird dann von der Heizrohreinheit 23 des als Heizkessel bzw. Boiler fungierenden Wärmetauschers 13 an den oberen Teil 22.1 der Solarrohreinheit 22 des Wärmetauschers 13 abgegeben und das durch den oberen Teil 22.1 fliessende Kühlmittel wird dadurch aufgeheizt. Von dem oberen Teil 22.1 gelangt das aufgeheizte Kühlmittel in den unteren Teil 22.2 der Solarrohreinheit 22 und von dieser in den Kühlmittelrücklauf 17. Die Umwälzpumpe 21 des Kühlmittelrücklaufs 17 wird nun entweder manuell oder vorzugsweise mittels der Steuereinheit 24 automatisch auf Dauerbetrieb geschaltet und befördert das aufgeheizte Kühlmittel durch das wenigstens eine thermisch leitende Rohr 5 der Eis- und/oder Schmelzeinrichtung 4 der Sonnenkollektoreinrichtung(en) 1, welches die Wärme wiederum an die Vakuumröhrenkollektoren 2 abgibt, was zum Schmelzen von oberhalb des wenigstens einen thermisch leitenden Rohrs 5 befindlichem Schnee und/oder Eis führt. Auf diese Weise kann der Schnee von unten soweit zum Schmelzen gebracht werden, dass die gesamte Schneedecke auf den Vakuumröhrenkollektoren 2 ins Rutschen gerät und insbesondere bei aufgeständerter Positionierung der Vakuumröhrenkollektoren 2 von diesen herab gleitet. Entsprechendes gilt für eine Eisdecke. Es entstehen dabei praktisch keine Wärmeverluste, solange die Schnee- bzw. Eisdecke noch über den Vakuumröhrenkollektoren geschlossen ist.

Nachdem die Schnee- bzw. Eisdecke zumindest teilweise weggeschmolzen bzw. von den Vakuumröhrenkollektoren 2 abgerutscht ist, kann die Solaranlage mittels der Steuereinheit 24 wieder auf Normalbetrieb umgestellt werden. Der Zeitpunkt der Umstellung auf Normalbetrieb kann beispielsweise visuell, empirisch oder mittels geeigneter Sensoren, z.B. einem Lichtsensor und/oder einem Temperatursensor im Endbereich 6 einer jeden Sonnenkollektoreinrichtung 1, ermittelt werden. Ist das wenigstens eine thermisch leitende Rohr 5 aus Energiespargründen nur in dem oberen Endbereich 6 des jeweiligen Sonnenkollektoreinrichtung 1 angeordnet, so wird vorerst auch nur dieser obere Endbereich 6 von Schnee bzw. Eis befreit. Jedoch wird auch dann, wenn nur dieser Endbereich 6 von Schnee bzw. Eis befreit ist, aus Gründen der Energieeffizienz bevorzugterweise bereits in den Normalbetrieb umgeschaltet, denn die von dem freigelegten Endbereich 6 der Sonnenkollektoreinrichtung 1 gewonnene Wärme reicht aus, um mittels des entsprechend erwärmten Kühlmittel des Kühlmittelrücklaufs 17 das wenigstens eine thermisch leitende Rohr 5 und gegebenenfalls die thermisch leitende Platte 7 entsprechend warm zu halten, sodass nach einiger Zeit der restliche Schnee bzw. das restliche Eis abgeschmolzen wird, wobei die gewonnene Wärme vorteilhafterweise zusätzlich zur Warmwassererzeugung und Heizunterstützung eingesetzt werden kann.

## Patentansprüche

1. Sonnenkollektoreinrichtung mit mehreren nebeneinander angeordneten Sonnenkollektoren (2) und einer Schnee- und/oder Eisschmelzeinrichtung (4, 5, 7), **dadurch gekennzeichnet, dass** die Sonnenkollektoren (2) als Vakuumröhrenkollektoren ausgebildet sind, die jeweils ein Glasrohr, einen in dem Glasrohr angeordneten Absorber und einen Reflektor mit einer Reflektionsfläche umfassen, und dass die Schnee- und/oder Eisschmelzeinrichtung (4) wenigstens ein thermisch leitendes Rohr (5) umfasst, das unterhalb der Sonnenkollektoren (2) verläuft, sodass die Reflektionsfläche der Reflektoren der als Vakuumröhrenkollektoren ausgebildeten Sonnenkollektoren (2) von dem wenigstens einen thermisch leitenden Rohr (5) wegweist.

2. Sonnenkollektoreinrichtung nach einem der vorhergehenden Ansprüche, **dadurch gekennzeichnet, dass** das wenigstens eine thermisch leitende Rohr (5) in Querrichtung zu den Sonnenkollektoren (2) und insbesondere mäanderförmig verläuft.

3. Sonnenkollektoreinrichtung nach einem der vorhergehenden Ansprüche, **dadurch gekennzeichnet, dass** das wenigstens eine thermisch leitende Rohr (5) als Rohrschleife ausgebildet ist.

4. Sonnenkollektoreinrichtung nach Anspruch 2 oder 3, **dadurch gekennzeichnet, dass** das wenigstens eine thermisch leitende Rohr (5) unter einem Endbereich (6) der nebeneinander angeordneten Sonnenkollektoren (2) verläuft, der an einem Gebäudedach weiter oben als der andere Endbereich anbringbar ist und der insbesondere ein Viertel der Sonnenkollektoren (2) umfasst.

5. Sonnenkollektoreinrichtung nach einem der vorhergehenden Ansprüche, **dadurch gekennzeichnet, dass** die Schnee- und/oder Eisschmelzeinrichtung (4) eine thermisch leitende Platte (7) umfasst, die zwischen den Sonnenkollektoren (2) und dem wenigstens einen thermisch leitenden Rohr (5) angeordnet ist.

6. Sonnenkollektoreinrichtung nach Anspruch 5, **dadurch gekennzeichnet, dass** die thermisch leitende Platte (7) als rostfreies Blech ausgebildet ist.

7. Sonnenkollektoreinrichtung nach Anspruch 6, **dadurch gekennzeichnet, dass** die thermisch leitende Platte (7) als Aluminiumblech ausgeführt.

8. Sonnenkollektoreinrichtung nach einem der Ansprüche 5 bis 7, **dadurch gekennzeichnet, dass** auf der den Sonnenkollektoren (2) gegenüberliegenden Seite der thermisch leitenden Platte (7) wenigstens ein Abstandshalter (8) vorgesehen ist, um einen Zwischenraum zwischen der thermisch leitenden Platte (7) und einem Gebäudedach zu schaffen.

9. Sonnenkollektoreinrichtung nach Anspruch 8, **dadurch gekennzeichnet, dass** der wenigstens eine Abstandshalter (8) aus Gummi, Kunststoff und/oder Holz ist.

10. Sonnenkollektoreinrichtung nach einem der vorhergehenden Ansprüche, **dadurch gekennzeichnet, dass** ein Schnee- und/oder Eiserkennungssensor vorgesehen ist.

11. Sonnenkollektoreinrichtung nach Anspruch 10, **dadurch gekennzeichnet, dass** der Schnee- und/oder Eiserkennungssensor zwischen zwei benachbarten Sonnenkollektoren (2) angeordnet ist.

12. Sonnenkollektoreinrichtung nach Anspruch 10 oder 11, **dadurch gekennzeichnet, dass** ein Sonneneinstrahlungserkennungssensor vorgesehen ist.

13. Sonnenkollektoreinrichtung nach Anspruch 12, **dadurch gekennzeichnet, dass** der Sonneneinstrahlungserkennungssensor auf der dem wenigstens einen thermisch leitenden Rohr (5) gegenüberliegenden Seite der Sonnenkollektoren (2), insbesondere beabstandet zu den Sonnenkollektoren (2), angeordnet ist.

14. Solaranlage mit einem Solarkreislauf (11) und einem Heizkreislauf (12) mit einer Heizeinheit (14), wobei der Solarkreislauf (11) und der Heizkreislauf (12) über einen Wärmetauscher (13) miteinander gekoppelt sind, **dadurch gekennzeichnet, dass** in dem Solarkreislauf (11) eine oder mehrere Sonnenkollektoreinrichtungen (1) nach einem der vorhergehenden Ansprüche vorgesehen sind, wobei das wenigstens eine thermisch leitende Rohr (5) der Schnee- und/oder Eisschmelzeinrichtung (4) einer jeden Sonnenkollektoreinrichtung (1) Teil eines Kühlmittelrücklaufs (17) des Solarkreislaufs (11) bildet.

15. Verfahren zum Betreiben einer Solaranlage nach Anspruch 14, **dadurch gekennzeichnet, dass** beim Vorhandensein von Schnee und/oder Eis auf den Sonnenkollektoren (2) der einen oder mehreren Sonnenkollektoreinrichtungen (1) die Heizeinheit (14) des Heizkreislaufs (12) betrieben wird, um Wärme zu generieren, die über den Wärmetauscher (13) an das im Solarkreislauf (11) befindliche Kühlmittel abgegeben wird und dieses aufheizt, wobei mittels einer Umwälzpumpe (21) des Solarkreislaufs (11) das aufgeheizte Kühlmittel über den Kühlmittelrücklauf (17) des Solarkreislaufs (11) durch das wenigstens eine thermisch leitende Rohr (5) der jeweiligen Schnee- und/oder Eisschmelzeinrichtung (4) der einen oder mehreren Sonnenkollektoreinrichtungen (1) befördert wird, um zumindest teilweises Schmelzen von Schnee und/oder Eis zu bewirken.

16. Verfahren nach Anspruch 15, **dadurch gekennzeichnet, dass** die Heizeinheit (14) des Heizkreislaufs (12) nur bei genügender Sonneneinstrahlung betrieben wird.

17. Verfahren nach Anspruch 16, **dadurch gekennzeichnet, dass** die Solaranlage (10) in einen Normalbetrieb umschaltet, wenn die Sonnenkollektoren (2) der einen oder mehreren Sonnenkollektoreinrichtungen (1) zumindest teilweise von Schnee und/oder Eis freigelegt sind, wobei im Normalbetrieb die Umwälzpumpe (21) des Solarkreislaufs (11) nur dann in Betrieb genommen wird, wenn die Temperatur des in den Sonnenkollektoren (2) befindlichen Kühlmittels die Temperatur des Heizmediums einer Wasserspeichereinheit (13) des Heizkreislaufs (12) übersteigt.

18. Verfahren nach einem der Ansprüche 15 bis 17, **dadurch gekennzeichnet, dass** das Vorhandensein von Schnee und/oder Eis auf den Sonnenkollektoren (2) erkannt wird, wenn der Messwert eines Schnee- und/oder Eiserkennungssensors einen bestimmten ersten Grenzwert überschreitet.

19. Verfahren nach einem der Ansprüche 16 bis 18, **dadurch gekennzeichnet, dass** auf genügende Sonneneinstrahlung erkannt wird, wenn der Messwert eines Sonneneinstrahlungserkennungssensors einen bestimmten zweiten Grenzwert überschreitet.
